(19) Europäisches Patentamt
European Patent Office
Office européen des brevets

(11) **EP 2 918 131 B1**

(12) **EUROPEAN PATENT SPECIFICATION**

(45) Date of publication and mention
of the grant of the patent:
**27.06.2018 Bulletin 2018/26**

(51) Int Cl.:
***H04W 74/08*** *(2009.01)*    ***H04W 52/46*** *(2009.01)*
***H04W 84/18*** *(2009.01)*

(21) Application number: **13840149.2**

(22) Date of filing: **08.11.2013**

(86) International application number:
**PCT/IB2013/003098**

(87) International publication number:
**WO 2014/072830 (15.05.2014 Gazette 2014/20)**

(54) **AN IMPROVED CHANNEL ASSESSMENT SCHEME**

VERBESSERTES KANALBEURTEILUNGSSCHEMA

SYSTÈME D'ÉVALUATION DE CANAL AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2012 US 201261724917 P**

(43) Date of publication of application:
**16.09.2015 Bulletin 2015/38**

(73) Proprietor: **King Abdullah University of Science
and Technology
Thuwal 23955-6900 (SA)**

(72) Inventor: **BADER, Ahmed
Amman (JO)**

(74) Representative: **Feray, Valérie et al
Ipsilon
Le Centralis
63, avenue du Général Leclerc
92340 Bourg-la-Reine (FR)**

(56) References cited:

• **AHMED BADER ET AL: "An Efficient Multi-Carrier
Position-Based Packet Forwarding Protocol for
Wireless Sensor Networks", IEEE
TRANSACTIONS ON WIRELESS
COMMUNICATIONS, IEEE SERVICE CENTER,
PISCATAWAY, NJ, US, vol. 11, no. 1, 1 January
2012 (2012-01-01), pages 305-315, XP011398664,
ISSN: 1536-1276, DOI:
10.1109/TWC.2011.120911.110674**

• **AHMED BADER: "Commercial multihop
networks", 4 April 2010 (2010-04-04),
TELECOMMUNICATIONS (ICT), 2010 IEEE 17TH
INTERNATIONAL CONFERENCE ON, IEEE,
PISCATAWAY, NJ, USA, PAGE(S) 316 - 323,
XP031685461, ISBN: 978-1-4244-5246-0 * page
320, left-hand column, line 35 - line 58 ***

• **TSENG Y-C ET AL: "Adaptive Approaches to
Relieving Broadcast Storms in a Wireless
Multihop Mobile Ad Hoc Network", IEEE
TRANSACTIONS ON COMPUTERS, IEEE
SERVICE CENTER, LOS ALAMITOS, CA, US, vol.
52, no. 5, 1 May 2003 (2003-05-01), pages 545-557,
XP002349202, ISSN: 0018-9340, DOI:
10.1109/TC.2003.1197122**

• **JIE XU ET AL: "Towards Analysis of Intra-flow
Contention in Multi-hop Wireless Networks",
MOBILE AD-HOC AND SENSOR NETWORKS
(MSN), 2010 SIXTH INTERNATIONAL
CONFERENCE ON, IEEE, 20 December 2010
(2010-12-20), pages 176-184, XP031980297, DOI:
10.1109/MSN.2010.33 ISBN: 978-1-4244-9456-9**

• **KORKMAZ G ET AL: "Urban Multi-Hop Broadcast
Protocol for Inter-Vehicle Communications
systems", VANET 04; [PROCEEDINGS OF THE
ACM INTERNATIONAL WORKSHOP ON
VEHICULAR AD HOC NETWORKS],
PHILADELPHIA, PA, USA, 1 October 2004
(2004-10-01), pages 76-85, XP002481596, DOI:
10.1145/1023875.1023887 ISBN:
978-1-58113-922-8**

**(Cont. next page)**

- KOHEI OHNO ET AL: "Detection and Avoidance technique for UWB radio interfering to OFDM system using Guard Interval", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 963-967, XP031659622, ISBN: 978-1-4244-5122-7
- CLANCY T C ET AL: "Security in Cognitive Radio Networks: Threats and Mitigation", COGNITIVE RADIO ORIENTED WIRELESS NETWORKS AND COMMUNICATIONS, 2008. CROWNCOM 2008. 3RD INTERNATIONAL CONFERENCE ON, IEEE, PISCATAWAY, NJ, USA, 15 May 2008 (2008-05-15), pages 1-8, XP031285133, ISBN: 978-1-4244-2301-9
- AHMED BADER: "Commercial multihop networks", 4 April 2010 (2010-04-04), TELECOMMUNICATIONS (ICT), 2010 IEEE 17TH INTERNATIONAL CONFERENCE ON, IEEE, PISCATAWAY, NJ, USA, PAGE(S) 316 - 323, XP031685461, ISBN: 978-1-4244-5246-0 * page 320, left-hand column, line 35 - line 58 *
- AHMED BADER ET AL: "An Efficient Multi-Carrier Position-Based Packet Forwarding Protocol for Wireless Sensor Networks", IEEE TRANSACTIONS ON WIRELESS COMMUNICATIONS, IEEE SERVICE CENTER, PISCATAWAY, NJ, US, vol. 11, no. 1, 1 January 2012 (2012-01-01), pages 305-315, XP011398664, ISSN: 1536-1276, DOI: 10.1109/TWC.2011.120911.110674

**Description**

## CLAIM OF PRIORITY

This application claims the benefit of prior U.S. Provisional Application No. 61/724,917, filed on November 10, 2012.

## TECHNICAL FIELD

The present invention relates to a multihop network such as a wireless sensor network, and a scheme for a node in the network to assess a channel.

## BACKGROUND

Mobile multihop networks have been considered lately as viable alternatives for the delivery and sharing of multimedia content between users. Performance of such networks is typically measured in terms of conflicting objectives, namely: end-to-end latency, end-to-end energy consumption, and network throughput. Subsequently, this calls for packet delivery protocols which are able to establish a careful balance between these objectives. Recently, a packet forwarding protocol has been developed to meet such objectives. See Bader, Ahmed et al., "An Efficient Multi-Carrier Position-Based Packet Forwarding Protocol for Wireless Sensory Network," IEEE Transaction on Wireless Communications, Volume 11, no. 1 (January 2012).
For example, the protocol is built using orthogonal frequency division multiplexing (OFDM) for the physical (PHY) layer. Furthermore, the protocol utilizes position-based channel access techniques in conjunction with the OFDM PHY. This allows all eligible relays at a given hop to access the channel concurrently. Due to this property, the protocol is labelled as "multi-relay." The protocol is indifferent to mobility since it does not mandate relays to have knowledge of the network topology. The use of OFDM makes it also quite resilient to fast fading environments and thus well-suited for mobility.
"Commercial Multihop Networks" by Ahmed Bader, Telecommunications (ICT), 2010 IEEE 17th International Conference on Telecommunications, ISBN: 978-1-4244-5246-0, discloses a framework for deployment of multihop networks on a commercial basis, including addressing practical considerations into the implementation of such networks, as well as consideration of economic values and business motivations for service providers to adopt such a multihop network access model.

## SUMMARY

The object of the invention is achieved by the apparatuses and method of the appended independent claims.
One aspect of present invention provides a source node in a multihop network having a circuit that determines whether a channel is occupied by a packet transmission meeting predetermined criteria; wherein the source node determines whether to transmit in the channel based on the determination that the channel is occupied by a packet transmission meeting predetermined criteria; and wherein the criteria is based on a normalized auto-covariance of the power spectral density (PSD) of a total interference signal.
In another aspect of the present invention, the source node further determines whether it is in a data back-off zone by detecting data tones, and determines whether to transmit in the channel based on whether the node is in the data back-off zone. Typically, data tones correspond to subcarriers. Busy tone, however, may be of a single subcarrier dedicated to carrying the busy tone.
In another aspect of the present invention, the source node further determines whether it is in a busy tone back-off zone by detecting a busy tone, and determines whether to transmit in the channel based on whether the node is in the busy tone back-off zone.
In another aspect of the present invention, the source node transmits in the channel in a case that the channel is not occupied by a packet transmission meeting the predetermined criteria, the source node is not in the data tones back-off zone, and the source node is not in the busy tone back-off zone.
In another aspect of the present invention, the source node listens to the channel for an extended period and re-assess in a case that the channel is occupied by a packet transmission meeting the predetermined criteria, the source node is not in the data tones back-off zone, and the source node is in the busy tone back-off zone.
In another aspect of the present invention, the source node extracts a destination position from the busy tone, and transmits in the channel if an angle between the source node's destination and that of an ongoing transmission is $> \pi / 2$, in a case the source node is in the data tones back-off zone, and the source node is in the busy tone back-off zone.
In another aspect of the present invention, the source node does not transmit in a channel in a case that the channel is not occupied by a packet transmission meeting the predetermined criteria, the source node is not in the data tones back-off zone, and the source node is in the busy tone back-off zone.

In another aspect of the present invention, the source node transmits in the channel in a case that the channel is occupied by a packet transmission meeting the predetermined criteria, the source node is in the data tones back-off zone, and the source node is not in the busy tone back-off zone.

In another aspect of the present invention, the source node does not transmit in the channel in a case that the channel is not occupied by a packet transmission meeting the predetermined criteria, the source node is in the data tones back-off zone, and the source node is in the busy tone back-off zone.

One aspect of present invention provides a multihop network having a plurality of nodes. The nodes may be a source, a destination, or a relay which both receives and transmits data. The data includes a packet having a random access channel (RACH) area and a hop number.

The RACH area includes a list of subcarriers and a relay number. A node, such as a relay, randomly selects one of the subcarriers and modulates it with a time-domain signal.

A node (such as a relay) of the multihop network receiving the packet extracts the relay number, and thereby obtains the number of prior relays. Further, the node scans the subcarriers, and, in a case that a subcarrier having an energy level meeting or exceeding a predetermined amount is detected, the number of relays is incremented.

Further, the node in the multihop network is an OFDM wireless communication device.

In another aspect of the present invention, a source node of the multihop network dynamically allocates a size of the RACH area. The node listens to a RACH area during a packet transmission at a second hop for a number of nodes of the second hop. The node receives a number of nodes at a destination stage transmitted by a destination node. The source node determines a size of the RACH area based on the number of nodes of the second hop and the number of nodes at the destination stage.

Further, the size of the RACH area set is constant for a plurality of hops.

In another aspect of the present invention, a relay of the multihop network scans the subcarriers in a RACH area to estimate a number of previous-hop relays. The relay further receives or transmits a packet including a hop number. The node determines a transmit power level based on the number of previous-hop relays and the hop number.

Further, such determination is made using a lookup table.

## BRIEF DESCRIPTION OF THE DRAWINGS

Figure 1 illustrates a packet having a RACH area.

Figure 2 shows the probability of the estimated count matching the real relay count.

Figure 3 is the flow chart for dynamic resource allocation.

Figures 4 is the flow chart for open-loop power control.

Figure 5 illustrates a channel model of the total interference signal.

Figure 6 shows the probability mass function for the number of relay at an arbitrary hop.

Figure 7a illustrates sample realization of the interference-plus-noise auto-covariance of the power spectral density (PSD) in a multi-relay case.

Figure 7b illustrates sample realization of the interference-plus-noise auto-covariance of the power spectral density (PSD) in a single-relay case

Figure 8 illustrates the scheme for exposed nodes to capture more transmission opportunities.

## DETAILED DESCRIPTION OF THE SYSTEM

A multihop network includes a plurality of communication devices. An example is a wireless communication device. In a wireless sensor network, each of the communication devices is also a sensor.

The communication device is referred to as a node. A node transmitting data is a source node. Nodes that transmit or retransmit the data are also called relays.

A source node may not able to estimate the number of relays in the nearby ongoing packet transmission for the following reasons:

1. Current known packet structure does not provide information for such estimation. The estimation of the number of relays requires an "improved packet structure" such as one described in 61/717,289, filed October 23, 2012.

2. To exploit the improved packet structure, a node should switch to coherent channel assessment mode, i.e. it should synchronize with the ongoing packet transmission. This is typically a less-efficient method of channel assessment.

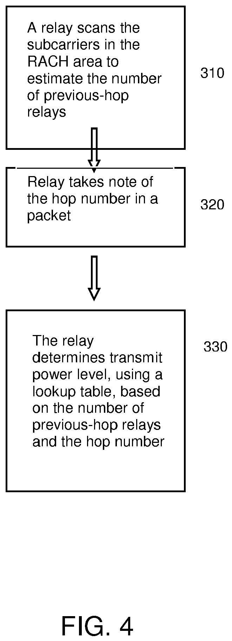

3. The source node will be able to synchronize to the ongoing packet transmission only if it lies inside the coverage perimeter shown in Figure 4 below. This is a case which does not occur very often.

4. Furthermore, one aspect of present invention is directed to cases where a source node lies inside one or both of the back-off zones but outside the coverage perimeter (discussed below).

Consequently, a source node utilizes a multi-stage channel assessment scheme:

1. The classical non-coherent energy detection method, whereby the node measures the energy on the data tones as well as the busy tone.
2. The source node performs the normalized auto-covariance computation described below to estimate whether it is in the vicinity of a packet transmission with a large number of relays. It will not be able to estimate how many relays there are, but just determine whether it is a large number or not, which is sufficient to make an educated decision. This is also a non-coherent method, which makes sense to use here, since the node may typically be outside the coverage perimeter of the ongoing transmission, i.e. it will not be able to synchronize with that transmission.
3. The third stage is reverted to only in certain scenarios as explained in the decision table below. In this stage, the source node extracts the position of the destination from the busy tone signal.

Aspects of present invention provide, inter alia, enhancements in the packet structure which enable dynamic allocation of resources throughout the packet forwarding process. One aspect provides nodes with the ability to closely estimate the number of relays of the ongoing packet transmission. Another aspect provides a dedicated field for the hop number. The enhancements allow a source node to perform dynamic allocation of random access channel (RACH) slots, and allow relays subsequent to the source node to perform open-loop power control.

The ability of nodes to estimate the number of relays at a given hop helps to understand the underlying node density. With this, nodes are able to undertake well-informed and more efficient resource allocation approaches. For instance, the nodes are now able to adjust the size of the RACH area in a way that does not compromise end-to-end delay performance but achieves better L2 throughput. (I.e., Layer 2 of the 7-layer OSI network model. Layer 2 corresponds to the Data Link layer.) Similarly, an open-loop power control scheme that is aware of the underlying density can reduce energy consumption while maintaining a minimum level of end-to-end delay.

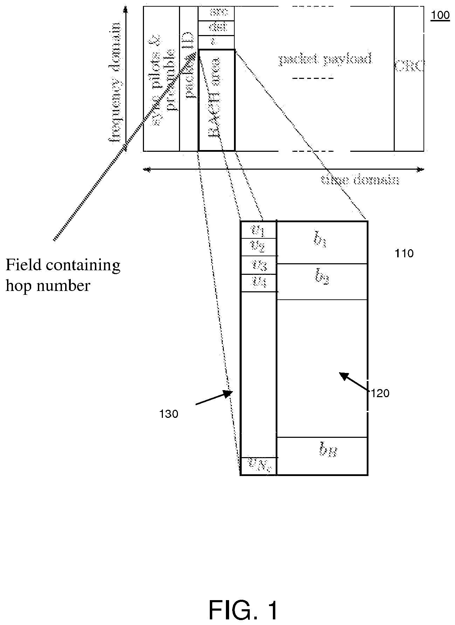

The improved packet structure is illustrated in Figure 1. The packet 100 introduces a separate field for the hop number. See FIG. 1, "i." The source node sets the value of this field to 1. Every hop, relays increment this field by 1. Thus, the packet is relayed from source to destination over multiple hops, nodes in between the source and destination act as repeaters. The number of hops corresponds to the number of times the packet was transmitted before it reached the destination. So, indeed the transmission from the source node comprises the first hop. The transmission one of whose receivers is the destination is the last hop.

The other modification is done to the first OFDM symbol of the RACH area (110). The RACH 110 includes slots 120 and subcarriers 130.

As shown in the Figure, there are $VN_c$ subcarriers. Each subcarrier is now accessible to relays. Each relay randomly selects one of those subcarriers and modulates it with a time-domain pulse. Next-hop nodes will scan through $VN_c$ subcarriers using a simple energy detector. Detection of any subcarrier holding substantial energy will increment the hop number by one. A subcarrier is considered to have been modulated by a relay if the energy measured on that subcarrier exceeds a certain preset threshold. The value of such a threshold is determined according to the desired probability of detection and probability of false alarm.

For example, a multihop network may have multiple relays concurrently transmit the same packet. E.g., in the $4^{th}$ hop of the packet towards the destination, 8 relays may be concurrently transmitting the packet. What they will do is to increment the hop number field in the packet structure by 1 such that the field contains the value 5. A receiver now will utilize the information on the $V_{Nc}$ subcarriers and will reach the conclusion that there were 8 relays in the $4^{th}$ hop.

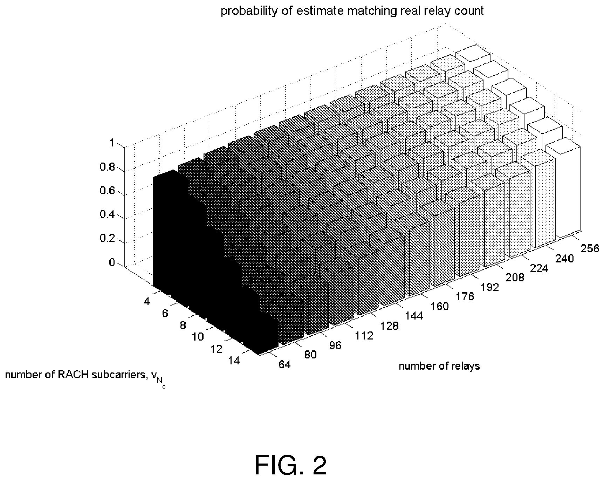

Since $V_{Nc}$ is relatively large, the probability of no collision is also relatively high. In other words, the estimated count is not far from reality. This is further demonstrated in Figure 2. Relays modulate their position information by randomly selecting one of the designated RACH slots bi ... bB, as explained in the "An Efficient Multi-Carrier Position-Based Packet Forwarding Protocol for Wireless Sensory Network," article. Nodes choosing unique slots are labelled within this context as "resolvable."

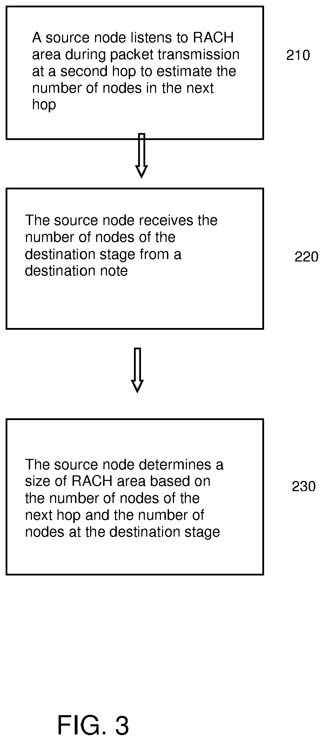

The feature of dynamic allocation of RACH resources is discussed herein. A flowchart is shown in FIG. 3.

The size of the RACH area in terms of number of OFDM symbols is determined by the source node and is maintained throughout the packet's journey towards the destination. The number of nodes in the 2nd hop (K2) as well as the last hop (Kq) are taken into consideration by the source node. The source node makes an estimate of K2 by listening to the RACH area (e.g., receiving and detecting signals in the RACH area) during the packet transmission at the second hop. (FIG. 3, 210). As a receiver in the last hop, the destination may conveniently construct an estimate of Kq. The value of Kq is sent back to the source in a separate packet. (FIG. 3, 220). It can be shown that through simulation that the series

$$\{K_i\}_{i=1}^q$$

is generally an increasing monotone such that

$$\max\{K_i\}_{i=1}^q = K_q$$

As such, knowledge of $K_2$ and $K_q$ only is sufficient for the source node on the evolution of the number of relays hop after hop.

Thus, the intensity of relays involved in forwarding the packet is a direct indication of the network node density. Consequently, the source can make an educated estimate on an optimized RACH allocation. In this invention, the source node will increase the size for the RACH area if it happens to be in a dense network. (FIG. 3, 230). This will ensure that the number of non-resolvable relays each hop is reduced. As a result, the probability of having relays which offer non-positive progress is reduced. This can be shown to result in saving energy consumed per packet. It also downsizes the interference footprint per packet particularly for narrow forwarding strip widths. This is true since adjustment in the size of the RACH area typically impact $K_i$-much more than $K_i$. In other words, it does not really affect the number relays offering positive progress. Further, the impact of those Ki-relays is only a small portion compared to $K_i$. As such, the number of hops q does not increase a lot. Subsequently, the end-to-end delay is only marginally affected. The dynamic allocation approach described above is suited for traffic with short length packets, e.g. video streaming. Any savings in terms of packet overhead proves to be really valuable.

The feature of open-loop power control, which is performed by each relay, is discussed herein. The flow chart is shown in FIG. 4.

The first objective is that, in case of high node density, end-to-end delay target can be easily met at lower transmit power levels. Therefore, it is beneficial to reduce power levels so as to avoid large interference footprints and consequently enhance the network throughput performance. On the other hand, in case of low node density, increasing the power level becomes mandatory to maintain the end-to-end delay within acceptable ranges.

The second objective here is to preserve energy; a precious resource for mobile terminals. Reducing transmit power reduces substantial the energy consumption causing only marginal impact on the delay performance.

A relay makes an estimate of the number of previous-hop relays by scanning the respective subcarriers within the RACH area. (FIG. 4, 310). For example, the packet is a data structure along the time dimension and the frequency dimension. The smallest unit in this packet is one time slot by one frequency subcarrier. Thus, in this example, the term "area" is defined by time-frequency unit. It also takes note of the hop number. (FIG. 4, 320). The latter is important simply because it qualifies whether a large number of relays corresponds to high density or is simply due to the packet having traversed many hops already. We recall here that the number of relays increases every hop. Using this information, the transmit power level is set based on preset look-up tables. (FIG. 4, 330). For example, the look-up table includes two columns: : the first is the number of relays, the second is the transmit power corresponding to the number of relays. Generally speaking, the larger the number of relays the smaller the transmit power would be. The determination of the optimal transmit power levels is an offline task done by the network designer taking into consideration various parameters such as PHY bit rate, target packet error rate, end-to-end delay, end-to-end energy consumption, ...etc.

One aspect of present invention provides feature-based assessment of a channel. A node wishing to access the channel performs an analysis of the interference signal's features. Using such an approach, it gains valuable knowledge about its vicinity in comparison to the case where only traditional assessment techniques are used. The improved scheme increases the throughput performance and reduces of channel access delay. A direct consequence of this is the reduction of jitter, which is one of the major concerns within the context of multimedia content delivery.

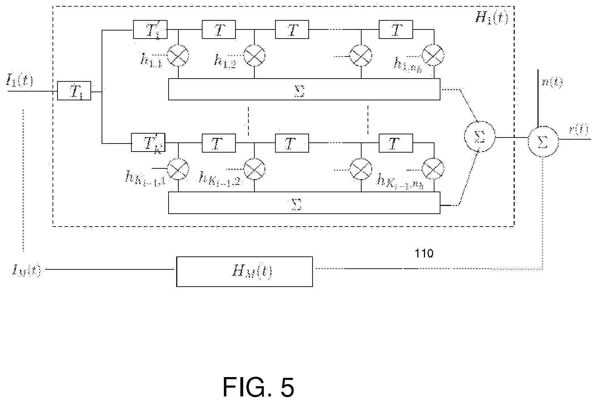

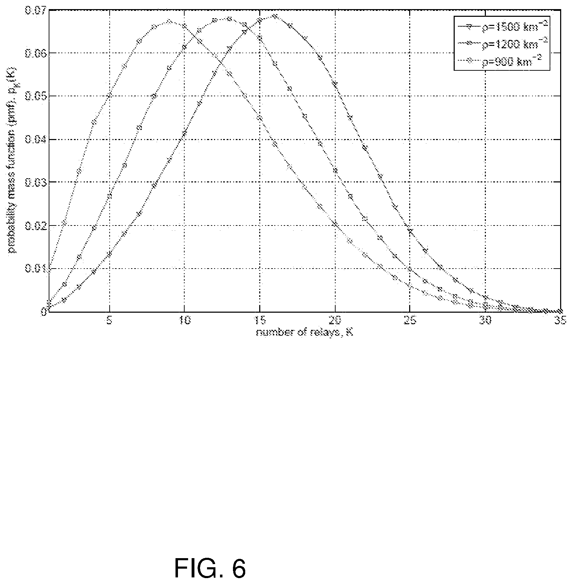

A source node assesses a channel before accessing it. A channel model is illustrated in Figure 5. See Bader, Ahmed et al., "An Efficient Multi-Carrier Position-Based Packet Forwarding Protocol for Wireless Sensory Network," IEEE Transaction on Wireless Communications, Volume 11, no. 1 (January 2012). Very often, the observing node (the source node) will lie in the vicinity of a packet transmission featuring a large number of relays. Under such circumstances, the features of the resulting total interference signal are dominated by that transmission. In fact, it is quite likely to be in such a situation. The probability mass function (PMF) of the number of relays per transmission is plotted in Figure 6 for various node densities. As illustrated in the figure, transmissions with large K are quite probable particularly at higher node densities. Under such circumstances, the total interference signal will show noticeable correlation across the frequency domain. Such a correlation is best captured by the observing node by computing the normalized auto-covariance of the power spectral density (PSD) of the total interference signal. This can be conveniently accomplished by exploiting the fact that nodes readily deploy Fast Fourier Transform (FFT) circuits which are required for the operation of the OFDM PHY. There are various algorithms in practice for the computation of the FFT. However, they are almost all based around the Discrete Fourier Transform (DFT) which is a well-known algorithm. The normalized auto-covariance is computed by the observing node as follows:

$$X_{cov}(c) = \begin{cases} \frac{1}{X_0} \sum_{n=0}^{N_s-c-1} \left( P_I(n+c) - \overline{P_I} \right) \left( P_I(n) - \overline{P_I} \right) & , c = 0 \ldots N_s - 1 \\ X_{cov}(-c) & , c = -N_s \ldots 0 \end{cases} \qquad (1)$$

where

$$\overline{P_I} = \frac{1}{N_s} \sum_{i=0}^{N_s-1} P_I(i)$$

and

$$X_0 = \sum_{n=0}^{N_s-1} \left( P_I(n) - \overline{P_I} \right)^2.$$

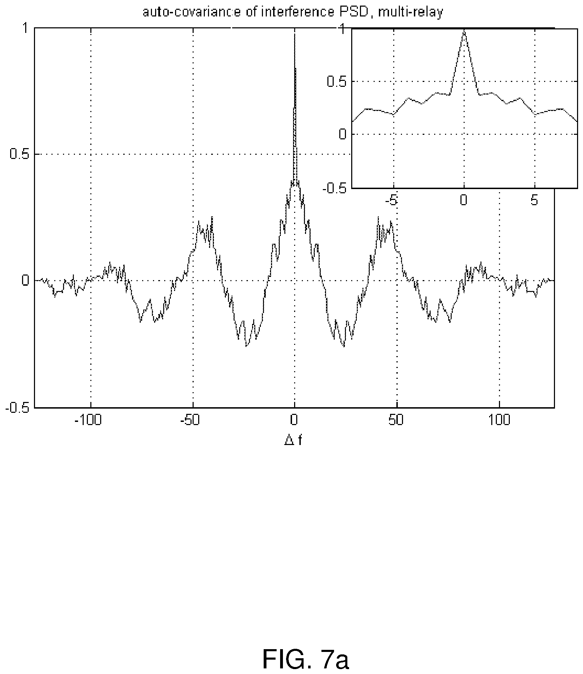

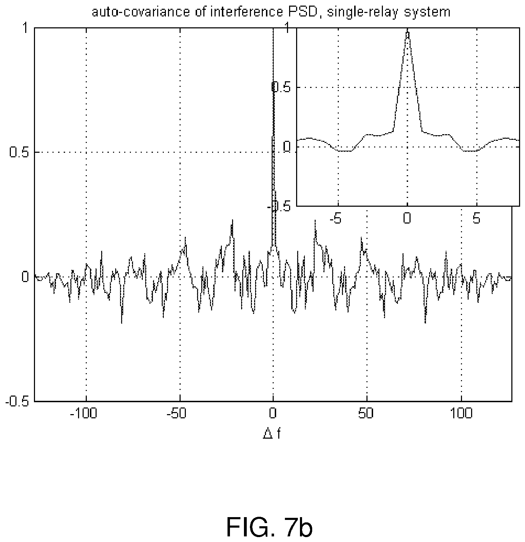

In contrast, the interference PSD in the case of single-relay systems features very low correlation across the frequency domain. In fact, the more concurrent single-relay transmissions there are, the less correlation is observed. Sample realizations of the interference PSD for both cases are shown in FIGS. 7a and 7b.

A simple yet effective characterization of the correlation featured by Xcov is the first zero-crossing. The larger the number of relays K is, the larger this zero-crossing is expected to be. The improved scheme developed in this invention further introduces an additional feature. The busy tone (BT) signal is conventionally a continuous analog signal. In our case, the BT signal is modulated with the position of the destination node.

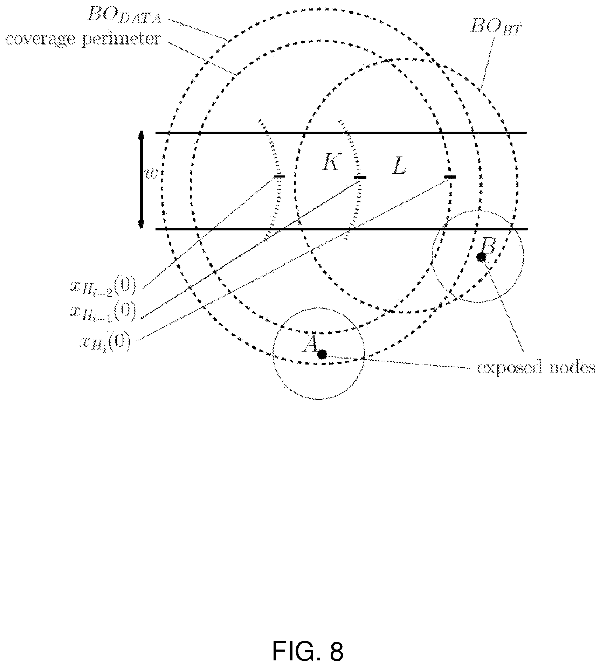

The ability of the observing node to detect the presence of a "large-K" transmission and to know the destination of that transmission opens the door wide for more channel access opportunities. This is illustrated in Figure 8. An exposed node utilizing classical channel assessment schemes will refrain from accessing the channel if it lies inside the back-off zone. The back-off zone is composed of two subzones, $BO_{DATA}$ and $BO_{BT}$, corresponding to the data tones back-off zone and busy tone back-off zone respectively. This is true even if the node lies outside the coverage perimeter of the nearby packet transmission. This is where feature detection lends itself to a more opportunistic channel access process.

In one aspect of present invention, a node determines whether it is in a back-off zone by means of an "energy detector." For the data tones back-off zone, the energy detector measures the aggregate energy level on those tones, outputs the average and compares it to a preset threshold. If larger than the threshold, the node decides that it is inside the data tones back-off zone.

An exposed node utilizing the improved assessment scheme of this invention first measures the PSD at the output of the FFT block. It then computes the first zero-crossing, denoted by $n_{fo}$, of $X_{cov}$. Denoting the decision threshold by $n_T$, then if $n_{fo} > n_T$ the node declares the channel as being one with a large number of relays.

The threshold $n_T$ setting depends on few factors such as the typical traffic load, node density, large-scale path loss coefficient, among other parameters. One way to set the threshold at a meaningful value is by means of simulations. One aspect of present invention provides that for typical network scenarios, setting $n_T = 6$ is a reasonable choice.

Accordingly, it knows that injecting a new packet into the network is unlikely to interfere with the ongoing nearby transmission. At the same time, it is likely to find a few potential receivers. Such a scenario is applicable to node A in Figure 8. Here, w is the forwarding strip width. L is the number of receivers for that packet transmission. As such, the number of nodes energizing the busy tone is also L. The coverage perimeter is simply the perimeter of the geographical area where the packet transmission can be received correctly. Additional information may be found in the incorporated "An Efficient Multi-Carrier Position-Based Packet Forwarding Protocol for Wireless Sensory Network" article.

For node B however, the improved algorithm introduces an additional stage in the decision-making process. Node B might not be able to properly characterize the PSD of the interference signal, since it lies outside $BO_{DATA}$. Nevertheless, it will be able to extract the position of the transmission's destination. The angle between the observing node's destination and that of the ongoing transmission is denoted by $\Delta\Theta_{dst}$. The observing node decides to transmit if $|\Delta\Theta_{dst}| > \pi/2$.

The various decision-making cases for this improved channel assessment scheme are highlighted in Table I below:

TABLE I

DECISION TABLE FOR CHANNEL ACCESS

| Case | in $BO_{DATA}$ | in $BO_{BT}$ | Large $K$ | Prior Art | Improved Scheme |
|------|------|------|------|------|------|
| 1 | n | n | n | transmit | transmit |
| 2 | n | n | y | transmit | keep listening to the channel for a period $< T_p$ then re-assess. |
| 3 | n | y | - | back off | extract destination position from the BT signal, if $\Delta\theta_{dst} > \frac{\pi}{2}$ then transmit, otherwise back off. |
| 4 | y | n | n | back off | back off |
| 5 | y | n | y | back off | transmit |
| 6 | y | y | n | back off | back off |
| 7 | y | y | y | back off | back off |

Case 3 of Table I may occur in lightly-loaded networks. For the sake of extracting the position of the destination, the observing node needs to switch from simple energy detection to coherent channel assessment. The node needs to synchronize with the BT signal in that case.

For Case 2, the packet flow is very likely to be moving away from the observing node. For a higher degree of confidence, it may be possible to extend the channel sensing activity for a few more samples (extended period) and then re-assess.

**Claims**

1. A source node in a multihop network, comprising:

   a circuit configured to listen (210) to a RACH area during a packet transmission at a second hop for a number of nodes of the second hop;
   the RACH area includes subcarriers of a random access channel, RACH, charcterised in that the source node further comprises a circuit configured to receive (220) a number of nodes at a destination stage transmitted by a destination node; and
   a circuit configured to determine (230) a size of the RACH area based on the number of nodes of the second hop and the number of nodes at the destination stage,
   wherein the size of the RACH area may be constant for a plurality of hops.

2. The source node of claim 1, wherein the source node transmits a packet having a RACH area at the determined size.

3. The source node of claim 1, wherein the source node increases the size of the RACH area when the source node determines it is in a dense network.

4. A method to dynamically allocate a size of a random access channel, RACH, area of a packet, comprising:

listening (210), by a source node of a multihop network, to a RACH area during a packet transmission at a second hop for a number of nodes of the second hop;

the RACH area includes subcarriers of the RACH, **characterised in that** the method further comprises receiving (220), by the source node, a number of nodes at a destination stage transmitted by a destination node; and determining (230) the size of the RACH area based on the number of nodes of the second hop and the number of nodes at the destination stage,

wherein the RACH area may be constant for all hops.

5. The method of claim 4, wherein the source node transmits a packet having a RACH area at the determined size.

6. The method of claim 4, wherein the source node increases the size of the RACH area when the source node determines it is in a dense network.

7. A relay of a multihop network, comprising:

   a circuit configured to scan (310) subcarriers in a random access channel, RACH, area to estimate a number of previous-hop relays; the relay further comprises
   a circuit configured to receive or transmit (320) a packet **characterised in that**: the packet includes a hop number; and
   a circuit configured to determine (330) a transmit power level based on the number of previous-hop relays and the hop number,
   wherein the transmit power level may be determined based on a lookup table.

8. The relay of claim 7, wherein the look-up table includes two columns, a first column containing a number of relays and a second column containing a transmit power corresponding to the number of relays.

9. The relay of claim 7, wherein the transmit power decreases as the number of relays increases.

10. A method for open-loop transmit power control, comprising;

    scanning (310), by a relay in a multihop network, subcarriers in a random access channel, RACH, area to estimate a number of previous-hop relays; the method further comprises
    receiving and transmitting (320) a packet **characterised in that**: the packet includes a hop number;
    determining (330) a transmit power level based on the number of previous-hop relays and the hop number,
    wherein the transmit power level may be determined based on a lookup table.

11. The method of claim 10, wherein the look-up table includes two columns, a first column containing a number of relays and a second column containing a transmit power corresponding to the number of relays.

12. The relay of claim 10, wherein the transmit power decreases as the number of relays increases.

**Patentansprüche**

1. Quellknoten in einem Mehr-Etappen-Netzwerk (Multi-Hop-Netzwerk), umfassend:

   eine Schaltung, die dafür konfiguriert ist, während einer Paketsendung in einer zweiten Etappe (Hop) für eine Anzahl von Knoten der zweiten Etappe einen RACH-Bereich abzuhören (210), wobei der RACH-Bereich Subträger eines Random Accecc Channel, RACH, enthält,
   **dadurch gekennzeichnet, dass** der Quellknoten ferner Folgendes umfasst:

   eine Schaltung, die dafür konfiguriert ist, eine Anzahl von Knoten auf einer Zielstufe, gesendet von einem Zielknoten, zu empfangen (220), und
   eine Schaltung, die dafür konfiguriert ist, basierend auf der Anzahl von Knoten der zweiten Etappe und der Anzahl von Knoten auf der Zielstufe eine Größe des RACH-Bereichs zu bestimmen (230),
   wobei die Größe des RACH-Bereichs für mehrere Etappen konstant sein kann.

2. Quellknoten nach Anspruch 1, wobei der Quellknoten ein Paket sendet, das einen RACH-Bereich mit der bestimmten Größe aufweist.

3.  Quellknoten nach Anspruch 1, wobei der Quellknoten die Größe des RACH-Bereichs erhöht, wenn der Quellknoten bestimmt, dass es ein dichtes Netzwerk ist.

4.  Verfahren zum dynamischen Zuweisen einer Größe eines Random-Access-Channel-, RACH-, Bereichs eines Pakets, umfassend:

    Abhören (210) eines RACH-Bereichs während einer Paketsendung in einer zweiten Etappe für eine Anzahl von Knoten der zweiten Etappe durch einen Quellknoten eines Mehr-Etappen-Netzwerks (Multi-Hop-Netzwerk), wobei der RACH-Bereich Subträger des RACH enthält,
    **dadurch gekennzeichnet, dass** das Verfahren ferner Folgendes umfasst:

    Empfangen (220) einer Anzahl von Knoten auf einer Zielstufe, gesendet von einem Zielknoten, durch den Quellknoten und
    Bestimmen (230) der Größe des RACH-Bereichs basierend auf der Anzahl von Knoten der zweiten Etappe und der Anzahl von Knoten auf der Zielstufe ,
    wobei der RACH-Bereich für mehrere Etappen konstant sein kann.

5.  Verfahren nach Anspruch 4, wobei der Quellknoten ein Paket sendet, das einen RACH-Bereich mit der bestimmten Größe aufweist.

6.  Verfahren nach Anspruch 4, wobei der Quellknoten die Größe des RACH-Bereichs erhöht, wenn der Quellknoten bestimmt, dass es ein dichtes Netzwerk ist.

7.  Relais eines Mehr-Etappen-Netzwerks (Multi-Hop-Netzwerk), umfassend:

    eine Schaltung, die dafür konfiguriert ist, Subträger eines Random-Access-Channel-, RACH-, Bereichs abzutasten (310), um eine Anzahl von Relais der vorhergehenden Etappe zu schätzen,
    wobei das Relais ferner Folgendes umfasst:

    eine Schaltung, die dafür konfiguriert ist, ein Paket zu empfangen oder zu senden (320), **dadurch gekennzeichnet, dass** das Paket eine Etappenanzahl enthält, und
    eine Schaltung, die dafür konfiguriert ist, basierend auf der Anzahl von Relais der vorhergehenden Etappe und der Etappenanzahl eine Sendeleistungshöhe zu bestimmen (330),
    wobei die Sendeleistungshöhe basierend auf einer Nachschlagetabelle bestimmt werden kann.

8.  Relais nach Anspruch 7, wobei die Nachschlagetabelle zwei Spalten enthält, wobei eine erste Spalte eine Anzahl von Relais enthält und eine zweite Spalte eine Sendeleistungshöhe enthält, die der Anzahl von Relais entspricht.

9.  Relais nach Anspruch 7, wobei die Sendeleistung mit zunehmender Anzahl von Relais abnimmt.

10. Verfahren zur Sendeleistungssteuerung im offenen Regelkreis, umfassend:

    Abtasten (310) von Subträgern in einem Random-Access-Channel-, RACH-, Bereich, um eine Anzahl von Relais der vorhergehenden Etappe zu schätzen,
    wobei das Verfahren ferner Folgendes umfasst:

    Empfangen und Senden (320) eines Pakets, **dadurch gekennzeichnet, dass** das Paket eine Etappenanzahl enthält,
    Bestimmen (330) einer Sendeleistungshöhe basierend auf der Anzahl von Relais der vorhergehenden Etappe und der Etappenanzahl,
    wobei die Sendeleistungshöhe basierend auf einer Nachschlagetabelle bestimmt werden kann.

11. Verfahren nach Anspruch 10, wobei die Nachschlagetabelle zwei Spalten enthält, wobei eine erste Spalte eine Anzahl von Relais enthält und eine zweite Spalte eine Sendeleistungshöhe enthält, die der Anzahl von Relais entspricht.

**12.** Relais nach Anspruch 10, wobei die Sendeleistung mit zunehmender Anzahl von Relais abnimmt.

**Revendications**

**1.** Noeud de source dans un réseau multisaut, comprenant :

un circuit configuré de manière à écouter (210) une zone de canal RACH pendant une transmission de paquets à un second saut pour nombre de noeuds du second saut ;
dans lequel la zone de canal RACH inclut des sous-porteuses d'un canal d'accès aléatoire, RACH, **caractérisé en ce que** le noeud de source comprend en outre :

un circuit configuré de manière à recevoir (220) un nombre de noeuds au niveau d'un étage de destination transmis par un noeud de destination ; et
un circuit configuré de manière à déterminer (230) une taille de la zone de canal RACH sur la base du nombre de noeuds du second saut et du nombre de noeuds au niveau de l'étage de destination ;
dans lequel la taille de la zone de canal RACH peut être constante pour une pluralité de sauts.

**2.** Noeud de source selon la revendication 1, dans lequel le noeud de source transmet un paquet présentant une zone de canal RACH à la taille déterminée.

**3.** Noeud de source selon la revendication 1, dans lequel le noeud de source augmente la taille de la zone de canal RACH lorsque le noeud de source détermine qu'il se situe dans un réseau dense.

**4.** Procédé d'affectation dynamique d'une taille d'une zone de canal d'accès aléatoire, RACH, d'un paquet, comprenant les étapes ci-dessous consistant à :

écouter (210), par le biais d'un noeud de source d'un réseau multisaut, une zone de canal RACH pendant une transmission de paquets à un second saut pour un nombre de noeuds du second saut ;
dans lequel la zone de canal RACH inclut des sous-porteuses du canal RACH, **caractérisé en ce que** le procédé comprend en outre les étapes ci-dessous consistant à :

recevoir (220), par le biais du noeud de source, un nombre de noeuds au niveau d'un étage de destination transmis par un noeud de destination ; et
déterminer (230) la taille de la zone de canal RACH sur la base du nombre de noeuds du second saut et du nombre de noeuds au niveau de l'étage de destination ;
dans lequel la zone de canal RACH peut être constante pour tous les sauts.

**5.** Procédé selon la revendication 4, dans lequel le noeud de source transmet un paquet présentant une zone de canal RACH à la taille déterminée.

**6.** Procédé selon la revendication 4, dans lequel le noeud de source augmente la taille de la zone de canal RACH lorsque le noeud de source détermine qu'il se situe dans un réseau dense.

**7.** Relais d'un réseau multisaut, comprenant :

un circuit configuré de manière à balayer (310) des sous-porteuses dans une zone de canal d'accès aléatoire, RACH, en vue d'estimer un nombre de relais de saut précédent ;
dans lequel le relais comprend en outre :

un circuit configuré de manière à recevoir ou transmettre (320) un paquet, **caractérisé en ce que** : le paquet comprend un numéro de saut ; et
un circuit configuré de manière à déterminer (330) un niveau de puissance d'émission sur la base du nombre de relais de saut précédent et du numéro de saut ;
dans lequel le niveau de puissance d'émission peut être déterminé sur la base d'une table de recherche.

**8.** Relais selon la revendication 7, dans lequel la table de recherche inclut deux colonnes, une première colonne contenant un nombre de relais et une seconde colonne contenant une puissance d'émission correspondant au nombre de relais.

9. Relais selon la revendication 7, dans lequel la puissance d'émission diminue à mesure que le nombre de relais augmente.

10. Procédé de commande de puissance d'émission en boucle ouverte, comprenant l'étape ci-dessous consistant à :

balayer (310), par le biais d'un relais dans un réseau multisaut, des sous-porteuses dans une zone de canal d'accès aléatoire en vue d'estimer un nombre de relais de saut précédent ;
dans lequel le procédé comprend en outre les étapes ci-dessous consistant à :

recevoir et transmettre (320) un paquet, **caractérisé en ce que** : le paquet inclut un numéro de saut ;
déterminer (330) un niveau de puissance d'émission sur la base du nombre de relais de saut précédent et du numéro de saut ;
dans lequel le niveau de puissance d'émission peut être déterminé sur la base d'une table de recherche.

11. Procédé selon la revendication 10, dans lequel la table de recherche inclut deux colonnes, une première colonne contenant un nombre de relais et une seconde colonne contenant une puissance d'émission correspondant au nombre de relais.

12. Relais selon la revendication 10, dans lequel la puissance d'émission diminue à mesure que le nombre de relais augmente.

Field containing
hop number

FIG. 1

probability of estimate matching real relay count

number of RACH subcarriers, $v_{N_c}$

number of relays

FIG. 2

A source node listens to RACH area during packet transmission at a second hop to estimate the number of nodes in the next hop — 210

The source node receives the number of nodes of the destination stage from a destination note — 220

The source node determines a size of RACH area based on the number of nodes of the next hop and the number of nodes at the destination stage — 230

# FIG. 3

A relay scans the subcarriers in the RACH area to estimate the number of previous-hop relays 310

Relay takes note of the hop number in a packet 320

The relay determines transmit power level, using a lookup table, based on the number of previous-hop relays and the hop number 330

FIG. 4

FIG. 5

FIG. 6

FIG. 7a

FIG. 7b

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61724917 A

- WO 61717289 A

### Non-patent literature cited in the description

- **BADER ; AHMED et al.** An Efficient Multi-Carrier Position-Based Packet Forwarding Protocol for Wireless Sensory Network. *IEEE Transaction on Wireless Communications,* January 2012, vol. 11 (1

- **AHMED BADER.** Commercial Multihop Networks. *Telecommunications (ICT), 2010 IEEE 17th International Conference on Telecommunications,* 2010, ISBN 978-1-4244-5246-0